# EUROPEAN PATENT SPECIFICATION

(11) **EP 2 530 775 B1**
(45) Date of publication and mention of the grant of the patent: **26.08.2015**
(21) Application number: 12170167.6
(22) Date of filing: 31.05.2012
(51) Int. Cl.: H01M 8/04, H01M 8/06

(54) **Fuel cell system**
Brennstoffzellensystem
Système de pile à combustible

(30) Priority: 31.05.2011 JP 2011122477; 31.05.2012 JP 2012123817
(43) Date of publication of application: 05.12.2012
(73) Proprietor: AISIN SEIKI KABUSHIKI KAISHA, Kariya-shi, Aichi 448-8650 (JP); KYOCERA CORPORATION, Kyoto-shi, Kyoto 612-8501 (JP)
(72) Inventor: Yokoyama, Junichi, Kariya-shi,, Aichi 448-8650 (JP); Taniguchi, Eiji, Kyoto-shi,, Kyoto 612-8501 (JP)
(74) Representative: TBK

(56) References cited:
- EP-A1- 1 132 251
- EP-A1- 1 858 100
- US-A1- 2004 229 097
- US-A1- 2011 039 173

## Description

### TECHNICAL FIELD

This disclosure generally relates to a fuel cell system.

### 13ACKGROUND DISCUSSION

A known fuel cell system is disclosed in JP2006-351408A (which will be hereinafter referred to as Reference 1). According to the fuel cell system disclosed in Reference 1, a fuel cell of the fuel cell system is configured to operate in a predetermined state where the fuel cell is restrained from malfunctioning in a case where it is detected that a sensor malfunctions and an alternative sensor, which outputs an output value that is usable as an alternative value to an output value of the sensor where the malfunction is detected, does not exist. Therefore, even when the sensor detecting an operating state of the fuel cell malfunctions, a desired operation of the fuel cell is ensured. In procedures to determine whether or not the sensor malfunctions, it is determined, for example, whether or not an output value exceeding an upper limit value or falling below a lower limit value is obtained where the upper limit value and the lower limit value are specified beforehand relative to an output value of the sensor in a normal state, whether or not an output value of the sensor is maintained at a fixed value in a state where an output value of another sensor having an appropriate connection with the sensor fluctuates, or whether or not the output value itself is obtained from the sensor.

Another known fuel cell system is disclosed in JP2007-287704A (which will be hereinafter referred to as Reference 2). The fuel cell system disclosed in Reference 2 includes a fuel cell temperature monitoring device and a fuel cell cooling water temperature detecting device each serving as temperature detecting means for detecting a temperature. In a case where a detected temperature by each of the fuel cell temperature monitoring device and the fuel cell cooling water temperature detecting device reaches a value out of a specified range, an operation of the fuel cell system is stopped and such error state is alerted via a generated power display portion. Accordingly, the operation of the fuel cell system is stopped in a case where the detected temperature reaches a value out of the specified range and the error is alerted by a simple structure. In addition, because the error is alerted via the generated power display portion, the generated power display portion is used for both the generated power display and the error alert. An operation display portion including the generated power display portion is simply configured at a reduced cost while achieving an easy-to understand display.

According to the fuel cell system disclosed in Reference 1, the procedures to determine whether or not the sensor malfunctions are based on whether or not the output value exceeding the upper limit value or falling below the lower limit value is obtained. At this time, however, it may be unclear whether the output value Is out of a predetermined temperature range (i.e., the output value exceeds the upper limit value or falls below the lower limit value) because the sensor itself malfunctions or a physical quantity serving as a detection target of the sensor (for example, a temperature) is actually out of the predetermined temperature range. In this case, in order to increase maintainability after the error occurrence, it is required to identify whether the error is due to the malfunction of the sensor or due to the error state of the physical quantity as the detection target.

In addition, according to the fuel cell system disclosed in Reference 2, the operation of the fuel cell system is stopped when the temperature reaches a value out of the specified range and the error is alerted by the simple structure. However, it may be unclear whether the output value is out of the specified range because the sensor itself malfunctions or the physical quantity serving as the detection target of the sensor (for example, the temperature) is actually out of the specified range. In this case, in order to increase maintainability after the error occurrence, it is required to identify whether the error is due to the malfunction of the sensor or due to the error state of the physical quantity as the detection target.

Furthermore, the document US 2004/229097 A1 discloses a method for determining an abnormality of coolant temperature in which it is determined whether or not a state in which a coolant temperature is at or above an upper limit value or at or below a lower limit value has continued for a prescribed period to thereby prevent a wrong detection caused by noise, for example.

Still further, the document EP 1 858 100 A1 discloses that, in a case where a sensor value of a pressure sensor is not kept in an abnormal value range over a certain time period, the sensor value in the abnormal value range is considered due to a temporary detection error or the like. On the other hand, in case where a sensor value of the pressure sensor is kept in the abnormal value range over the certain time period, it can be determined that an abnormality has occurred in the pressure sensor, and therefore a pressure control valve is controlled so that a valve opening thereof is equal to or larger than a predetermined opening.

A need thus exists for a fuel cell system in which whether a detection sensor itself malfunctions or a detection target of the detection sensor is in an error state is identified, and maintainability after an error occurrence is enhanced.

### SUMMARY

The above object is achieved by a fuel cell system according to claim 1. Further features and advantageous modifications are shown in the dependent claims.

According to an aspect of this disclosure, a fuel cell system includes a fuel cell generating an electric power by a fuel and an oxidant gas, a reforming portion generating the fuel by a source material and water, a combusting portion burning an anode-off gas of the fuel cell to heat the reforming portion, an exhaust heat recovery system recovering an exhaust heat of the fuel cell system, a detection sensor detecting a state of a physical quantity of at least one of the fuel cell, the reforming portion, the combusting portion, the exhaust heat recovery system, and a fluid flowing in and out of each of the fuel cell, the reforming portion, the combusting portion, and the exhaust heat recovery system, the fluid including the fuel, the oxidant gas, the source material, the water, and the anode-off gas, and a control device controlling the fuel cell system based on an output signal from the detection sensor. The control device includes a sensor malfunction determination device determining whether or not the output signal of the detection sensor is out of a first determination range for a first determination time or longer, and a state error determination device determining whether or not the state of the physical quantity serving as a detection target of the detection sensor is in an error state on a basis of whether or not the output signal of the detection sensor is out of a second determination range for a second determination time or longer, the second determination range being narrower than the first determination range and fully included in the first determination range, the second determination time being longer than the first determination time. The control device includes a storage device storing a determination result from each of the sensor malfunction determination device and the state error determination device.

Accordingly, in a case where a malfunction of the detection sensor because of a disconnection or a short-circuit, for example, occurs and therefore the output signal of the detection sensor is out of the first determination range, the sensor malfunction determination device determines that the detection sensor itself malfunctions when the aforementioned state is continued for the first determination time or longer. The determination takes a relatively short time. At this time, the state error determination device performs the determination after an elapse of the second determination time that is longer than the first determination time. Therefore, the prohibition of the determination by the state error determination device after the sensor malfunction determination device determines the malfunction of the detection sensor may inhibit an existence of the determination of the malfunction of the detection sensor and the determination of the state error of the physical quantity as the detection target of the detection sensor at the same time.

In addition, in a case where the output signal of the detection sensor is within the first determination range and is out of the second determination range because of the error state of the physical quantity of the detection target, and such state is continued for the second determination time or longer, the state error determination device determines that the state of the physical quantity as the detection target of the detection sensor is in the error state.

Further, the storage device stores the determination result of each of the determination devices. Thus, it is identifiable whether the detection sensor itself malfunctions or the detection target of the detection sensor is in the error state on a basis of the determination result stored at the storage device after at least one of the fuel cell system and the detection sensor malfunctions, which may increase maintainability of the fuel cell system.

The control device includes a determination prohibition device prohibiting a determination by the state error determination device in a case where the sensor malfunction determination device determines that the detection sensor malfunctions.

Accordingly, the state error determination device does not perform the determination unless the second determination time elapses. Thus, the prohibition of the determination by the state error determination device after the sensor malfunction determination device determines the malfunction of the detection sensor may inhibit the existence of the determination of the error state of the physical quantity as the detection target of the detection sensor, and the determination of the malfunction of the detection sensor at the same time. As a result, the error state of the physical quantity as the detection target of the detection sensor, and the malfunction of the detection sensor may be securely restrained from being wrongly determined.

In a case where an alternative detection sensor of which a detection target is the same as the detection target of the detection sensor and which serves as an alternative of the detection sensor, the control device includes an alternative state error determination device determining whether or not the state of the physical quantity serving as the detection target of the alternative detection sensor is out of the second determination range for the second determination time or longer after the sensor malfunction determination device determines that the detection sensor malfunctions, and a warning device warning that the detection sensor malfunctions.

Accordingly, the fuel cell system is operated by means of the output signal from the alternative detection sensor. Thus, a power generation operation of the fuel cell system is continued while the malfunction of the detection sensor is being warned. Meanwhile, a replacement of the detection sensor, for example, may be prepared.

The first determination range is a range exceeding a normal operating range of the detection sensor.

Accordingly, the first determination range is specified so that, in the first determination range, the output signal that exceeds the normal operating range is obtained. That is, such output signal is prevented from being output unless the detection sensor malfunctions because of an error state such as the disconnection or the short-circuit, for example. As a result, the malfunction of the detection sensor is securely determined.

The second determination range is a range inhibited from exceeding the normal operating range of the detection sensor.

Accordingly, the second determination range is specified to be the normal operating range assumed and obtained when the fuel cell system is operated in a normal state (a start-up operation, a power generation operation, and a stop operation). As a result, the error state of the physical quantity serving as the detection target of the detection sensor is securely determined.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a schematic view illustrating a fuel cell system according to an embodiment disclosed here;

Fig. 2 is a block diagram of the fuel cell system illustrated in Fig. 1;

Fig. 3 is a flowchart of a control program performed by a control device of the fuel cell system illustrated in Fig. 2;

Fig. 4 is a time chart obtained when the flowchart illustrated in Fig. 3 is performed in a state where a detection sensor malfunctions;

Fig. 5 is a time chart obtained when the flowchart illustrated in Fig. 3 is performed in a state where a detection target of the detection sensor (i.e., a temperature of a combusting portion) is in an error state;

Fig. 6 is a block diagram of a control performed by the control device illustrated in Fig. 2;

Fig. 7 is a time chart obtained when the block diagram illustrated in Fig. 6 is performed;

Fig. 8 is a flowchart of the control program performed by the control device illustrated in Fig. 2;

Fig. 9 is a time chart obtained when the flowchart illustrated in Fig. 8 is performed in a state where the detection sensor malfunctions;

Fig. 10 is a time chart obtained when the flowchart illustrated in Fig. 8 is performed in a state where the detection target of the detection sensor (i_e., the temperature of the combusting portion) is in the error state; and

Fig. 11 is a block diagram of another control performed by the control device illustrated in Fig. 2.

### DETAILED DESCRIPTION

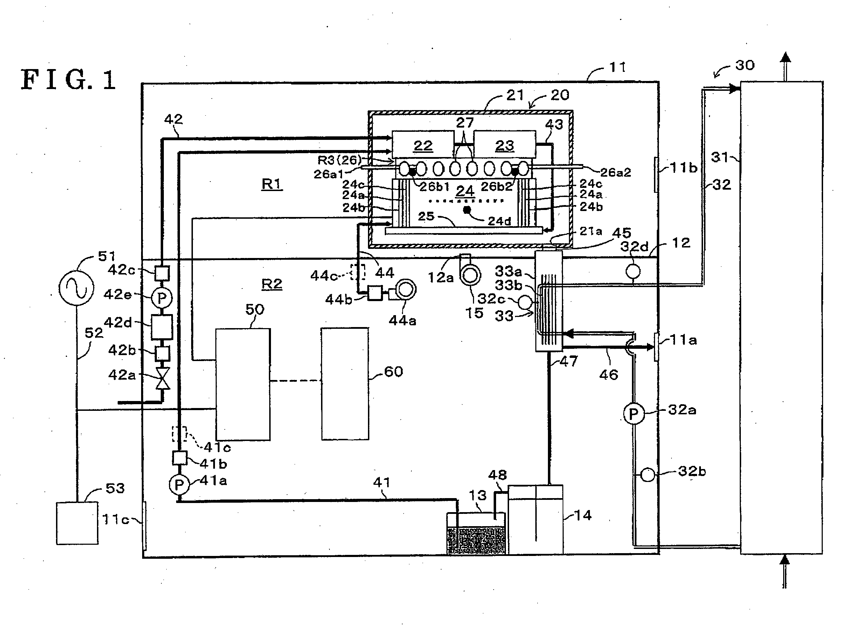

An embodiment will be explained with reference to the attached drawings. As illustrated in Fig. 1, a fuel cell system of the embodiment includes a case 11 substantially having a box shape, a fuel cell module 20, an exhaust heat recovery system 30, an inverter device 50, and a control device 60.

The case 11 includes a partition member 12 dividing an inside of the case 11 into a first chamber R1 serving as a first void and a second chamber R2 serving as a second void. The partition member 12 is a plate-shaped member dividing or separating the inside of the case 11 in a vertical direction (in an up-and-down direction). In the case 11, the first chamber R1 is arranged at an upper side relative to the partition member 12 and the second chamber R2 is arranged at a lower side relative to the partition member 12.

The fuel cell module 20 is accommodated within the first chamber R1 while having a distance (or a void) from an inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, the fuel cell 24, and a combusting portion 26.

The casing 21 made of an insulative material is substantially formed into a box shape. The casing 21 is supported via a support structure within the first chamber R1 while having the distance from the inner wall surface of the first chamber R1. The evaporating portion 22, the reforming portion 23, and the fuel cell 24 are arranged within the casing 21 in a state where the evaporating portion 22 and the reforming portion 23 are positioned at an upper side of the fuel cell 24.

The evaporating portion 22, which is heated by a combustion gas, evaporates water supplied to the evaporating portion 22 so as to generate water vapor and preheats a source material (fuel) supplied to the evaporating portion 22. The evaporating portion 22 mixes the water vapor generated In the aforementioned manner and the source material that is preheated so as to supply the mixture to the reforming portion 23. The source material corresponds to a gaseous fuel such as a natural gas and LPG, for example, and a liquid fuel such as kerosene, gasoline, and methanol, for example. According to the present embodiment, the natural gas is used as the source material.

A first end of a water supply pipe 41 is connected to the evaporating portion 22. A second end (a lower end) of the water supply pipe 41 is connected to a water tank 13 so that the second end is positioned within the water tank 13. A water pump 41a and a flow sensor 41b are provided in the mentioned order at the water supply pipe 41 from a side where the water tank 13 is provided. The water pump 41a supplies water to the evaporating portion 22 and controls or adjusts a volume of water supplied to the evaporating portion 22. The flow sensor 41b detects a flow rate of water (per time unit) flowing through the water supply pipe 41 so as to be supplied to the evaporating portion 22 and transmits a detection result (i.e., an output signal) to the control device 60. A pressure sensor 41c may be provided at the water supply pipe 41 to thereby detect a pressure of water flowing through the water supply pipe 41 and being supplied to the evaporating portion 22. The pressure sensor 41c transmits a detection result (i.e., an output signal) to the control device 60.

The source material is supplied to the evaporating portion 22 via a fuel supply pipe 42 from a fuel supply source. A pair of fuel valves 42a, a pressure sensor 42b, a desulfurizer 42d, a fuel pump 42e, and a flow sensor 42c are provided in the mentioned order at the fuel supply pipe 42 from an upstream side in view of a flow direction of the source material. The flow sensor 42c is desirably arranged at a downstream side of the desulfurizer 42d in view of the flow direction of the source material.

The fuel valves 42a are electromagnetic on-off valves for connecting and disconnecting the fuel supply pipe 42. The pressure sensor 42b detects a pressure of the source material flowing through the fuel supply pipe 42 and being supplied to the evaporating portion 22, and transmits a detection result (i.e., an output signal) of the pressure sensor 42b to the control device 60. The flow sensor 42c detects a flow rate of the source material (per time unit) supplied to the fuel cell 24 and transmits a detection result (i.e., an output signal) of the flow sensor 42c to the control device 60. The desulfurizer 42d removes sulfur content, for example, sulfur compound in the source material. The fuel pump 42e is a supply device supplying the source material to the fuel cell 24 and controls a supply volume of the source material from the fuel supply source depending on a control command from the control device 60.

The reforming portion 23 is heated by the combustion gas so as to receive heat necessary for a water vapor reforming reaction. As a result, the reforming portion 23 generates a reformed gas from a mixed gas (the source material and the water vapor) supplied from the evaporating portion 22. Specifically, the inside of the reforming portion 23 is filled with a catalyst, for example, ruthenium catalyst (Ru catalyst) and nickel catalyst (Ni catalyst). The mixed gas supplied from the evaporating portion 22 reacts by means of the catalyst so as to be reformed, thereby generating hydrogen gas and carbon monoxide gas (the water vapor reforming reaction). At the same time, carbon monoxide generated during the water vapor reforming reaction and the water vapor react so as to be converted to hydrogen gas and carbon dioxide, i.e., a carbon monoxide shift reaction occurs. The thus generated gas (the reformed gas) is supplied to a fuel electrode of the fuel cell 24. The reformed gas includes hydrogen, carbon monoxide, carbon dioxide, water vapor, and natural gas (methane gas) that is not reformed. The water vapor reforming reaction is an endothermic reaction while the carbon monoxide shift reaction is an exothermic reaction.

The fuel cell 24 includes a lamination of plural cells 24a each having a fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 degrees C to 1,000 degrees C. Not only hydrogen is used as the fuel but also natural gas or coal gas may be directly used as the fuel. When the natural gas or the coal gas is directly used as the fuel, the reforming portion 23 may be omitted.

A fuel flow passage 24b through which the reformed gas serving as the fuel flows is formed at the fuel electrode of each of the cells 24a. An air flow passage 24c through which air (cathode air) serving as oxidant gas flows is formed at the air electrode of each of the cells 24a.

The fuel cell 24 includes a temperature sensor 24d detecting a temperature of the fuel cell 24. The temperature sensor 24d is substantially positioned at a center in the lamination direction of the cells 24a of the fuel cell 24 and at a center in a vertical direction in Fig. 1. The temperature sensor 24d transmits a detection result to the control device 60.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end of the fuel flow passage 24b. The cathode air sent from a cathode air blower 44a serving as a cathode air sending device flows through a cathode air supply pipe 44 so as to be supplied from a lower end of the air flow passage 24c and be discharged from an upper end of the air flow passage 24c.

A flow sensor 44b is provided at the cathode air supply pipe 44. The flow sensor 44b detects a flow rate of cathode air (per time unit) supplied to the fuel cell 24 and transmits a detection result to the control device 60. A pressure sensor 44c may be provided at the cathode air supply pipe 44. The pressure sensor 44c detects a pressure of the cathode air flowing through the cathode air supply pipe 44 and being supplied to the fuel cell 24, and transmits a detection result (an output signal) to the control device 60.

The cathode air blower 44a is arranged within the second chamber R2. The cathode air blower 44a suctions air within the second chamber R2 and discharges the air to the air electrode of the fuel cell 24. A discharge volume of air by the cathode air blower 44a is controlled on a basis of a conditioned control (for example, a load electric power (power consumption) of the fuel cell 24).

In the fuel cell 24, the fuel supplied to the fuel electrode and the oxidant gas supplied to the air electrode achieve a power generation. Reactions indicated by a chemical formula (1) and a chemical formula (2) as below occur at the fuel electrode while a reaction indicated by a chemical formula (3) as below occurs at the air electrode. That is, oxide ion (O²⁻) generated at the air electrode penetrates through the electrolyte so as to react with hydrogen at the fuel electrode, thereby generating an electric energy. As a result,, the reformed gas and the oxidant gas (air) that have not been used in the power generation are discharged from the fuel flow passage 24b and the air flow passage 24c respectively.
(1) H₂ + O²⁻ → H₂O + 2e⁻
(2) CO + O²⁻ → CO₂ + 2e⁻
(3) 1/2O₂ + 2e ⁻→ O²⁻

The reformed gas (anode-off gas) that has not been used in the power generation is discharged from the fuel flow passage 24b and is burnt at a combustion void R3 formed between the fuel cell 24 and the evaporating portion 22 (the reforming portion 23) by means of the oxidant gas (air) that has not been used in the power generation. The resulting combustion gas heats the evaporating portion 22 and the reforming portion 23, and further brings the Inside of the fuel cell module 20 to be maintained at an operating temperature. Afterwards, the combustion gas is discharged to the outside of the fuel cell module 20 from an exhaust opening 21a.

Accordingly, the aforementioned combustion void R3 constitutes the combusting portion 26 heating the reforming portion 23 by at least combusting or burning the anode-off gas of the fuel cell 24. The anode-off gas is burnt to generate flames 27 at the combusting portion 26 (the combustion void R3). First and second ignition heaters 26a1 and 26a2 are provided at the combusting portion 26 so as to ignite the anode-off gas. Alternatively, either the first ignition heater 26a1 or the second ignition heater 26a2 may be provided at the combusting portion 26. In addition, temperature sensors 26b1 and 26b2 are provided at the combusting portion 26 so as to detect the temperature of the combusting portion 26. A detection result (an output signal) of each of the temperature sensors 26b1 and 26b2 is transmitted to the control device 60.

The exhaust heat recovery system 30 performs a heat exchange between an exhaust heat of the fuel cell 24 and a storage water so that the exhaust heat is recovered and stored in the storage water. The exhaust heat recovery system 30 includes a hot water storage tank 31 storing water (storage water, hot water), a water circulation line 32 where the water is circulated, and a heat exchanger 33 where the heat exchange is performed between an exhaust combustion gas from the fuel cell module 20 and the water.

The hot water storage tank 31 includes a single column-shaped container in which the water is stored in such a manner that a temperature at an upper portion of the water In the container is the highest, is gradually decreasing towards a lower portion of the water, and is the lowest at the lower portion of the water in the container. Water, i.e., tap water (at relatively a low temperature), for example, is supplied to a lower portion of the column-shaped container of the hot water storage tank 31. The water (hot water) at a relatively high temperature stored in the hot water storage tank 31 is discharged from an upper portion of the container of the hot water storage tank 31.

A first end of the water circulation line 32 is connected to the lower portion of the hot water storage tank 31 while a second end of the water circulation line 32 is connected to the upper portion of the hot water storage tank 31. A first temperature sensor 32b, a water circulation pump 32a serving as water circulation means, the heat exchanger 33, and a third temperature sensor 32d are provided in the mentioned order at the water circulation line 32 from the first end towards the second end thereof. In this case, the arrangement order of the water circulation pump 32a and the first temperature sensor 32b may be reversed.

The water circulation pump 32a suctions the water (the storage water) at the lower portion of the hot water storage tank 31 so that the water flows in an arrow direction in Fig. 1 through the water circulation line 32 to be discharged and supplied to the upper portion of the hot water storage tank 31. A flow rate (a sending amount) of the water flowing through the water circulation line 32 is controlled by the water circulation pump 32a. The sending amount of the water by the water circulation pump 32a is controlled so that a detection temperature by the third temperature sensor 32d (i.e., a temperature of the water at an entry side of the hot water storage tank 31) turns to be a predetermined temperature or falls within a predetermined temperature range.

The first temperature sensor 32b is provided at a portion of the water circulation line 32 where the storage water flows towards the heat exchanger 33, i.e., provided between the heat exchanger 33 and the hot water storage tank 31, The first temperature sensor 32b detects the temperature of the water at an entry side of the heat exchanger 33, i.e., the temperature of the water at an exit side of the hot water storage tank 31. The first temperature sensor 32b transmits a detection result to the control device 60.

The third temperature sensor 32d is provided at a portion on the water circulation line 32 where the storage water flows from the heat exchanger 33. The third temperature sensor 32d detects the temperature of the water at an exit side of the heat exchanger 33, i.e., the temperature of the water at the entry side of the hot water storage tank 31. The third temperature sensor 32d transmits a detection result to the control device 60.

The heat exchanger 33 is supplied with the exhaust combustion gas from the fuel call module 20 and the storage water from the hot water storage tank 31, so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

The heat exchanger 33 includes a casing 33a. A first connection pipe 45 is connected to an upper portion of the casing 33a. The first connection pipe 45 is connected to the exhaust opening 21a provided at a lower portion of the casing 21 of the fuel cell module 20 so that the exhaust combustion gas is discharged from the exhaust opening 21a. A second connection pipe 46 is connected to a lower portion of the casing 33a. The second connection pipe 46 is connected to an exhaust port 11a. A condensed water supply pipe 47 connected to a deionizer 14 is connected to a bottom portion of the casing 33a. A heat exchanging portion 33b serving as a condensation portion connected to the water circulation line 32 is provided within the casing 33a.

A second temperature sensor 32c is provided at the water circulation line 32 arranged within the heat exchanger 33. The second temperatures sensor 32c detects the temperature of the water at the heat exchanger 33 and transmits a detection result to the control device 60.

According to the heat exchanger 33 having the aforementioned configuration, the exhaust combustion gas from the fuel cell module 20 flows into the casing 33a through the first connection pipe 45. In a case where the exhaust combustion gas flows through the heat exchanging portion 33b where the storage water flows, the heat exchange is performed between the exhaust combustion gas and the storage water, thereby causing the exhaust combustion gas to be condensed and cooled. The exhaust combustion gas after condensation flows through the second connection pipe 46 to be discharged to the outside of the case 11 via the exhaust port 11a. Condensed water resulting from the aforementioned heat exchange flows through the condensed water supply pipe 47 so as to be supplied to the deionizer 14 (i.e., the condensed water drops by its own weight). On the other hand, the storage water flowing to the heat exchanging portion 33b is heated so as to flow out towards the upper portion of the hot water storage tank 31.

The fuel cell system of the present embodiment also includes the water tank 13 and the deionizer 14. The water tank 13 and the deionizer 14 are arranged within the second chamber R2. The water tank 13 stores pure water supplied from the deionizer 14. A water volume sensor (a water level sensor) is provided within the water tank 13 so as to detect in pure water volume in the water tank 13. The water volume sensor is a float-type or a capacitive-type water level indicator, for example. The water volume sensor transmits a detection signal to the control device 60.

The deionizer 14 incorporates activated carbon and ion-exchange resin. For example, the deionizer 14 is filled with the flaky activated carbon and the granular ion-exchange resin. In addition, depending on a state of treatment-object water, a hollow fiber filter may be provided at the deionizer 14. The deionizer 14 brings the condensed water from the heat exchanger 33 to be pure water by means of the activated carbon and the ion-exchange resin. The deionizer 14 is connected to the pure water tank 13 via a pipe 48. The pure water In the deionizer 14 is supplied to the pure water tank 13 by flowing through the pipe 48.

The fuel cell system includes an air inlet port 11c formed at the case 11 forming the second chamber R2, an air outlet port 11b formed at the case 11 forming the first chamber R1, and a ventilation air blower 15 provided at an air inlet port 12a formed at the partition member 12. In a case where the ventilation air blower 15 is operated, an outside air is suctioned to the second chamber R2 via the air inlet port 11c and is sent to the first chamber R1 by the ventilation air blower 15. The air in the first chamber R1 is discharged to the outside of the case 11 via the air outlet port 11b.

The fuel cell system also includes the inverter device 50. The inverter device 50 includes a first function for receiving a DC (direct-current) voltage output from the fuel cell 24 and converting the DC voltage into a predetermined AC (alternating-current) voltage so as to output the AC voltage to a power line 52 connected to an alternating system power supply 51 (i.e., a commercial power supply) (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control device 60.

The system power supply 51 supplies an electric power to the electric power load 53 via the power line 52 connected to the system power supply 51. The fuel cell 24 is connected to the power line 52 via the inverter device 50. The electric power load 53 is a load driven by an AC power source, i.e., an electrical appliance such as a hair drier, a refrigerator, and a television, for example.

The auxiliary machinery includes the motor-driven pumps 41a and 42e (the water pump 41a and the fuel pump 42e), the ventilation air blower 15 and the cathode air blower 44a for supplying the source material, water, and air to the fuel cell module 20, and the motor-driven pump 32a (the water circulation pump 32a) for circulating the storage water, for example. The auxiliary machinery is driven by the DC voltage.

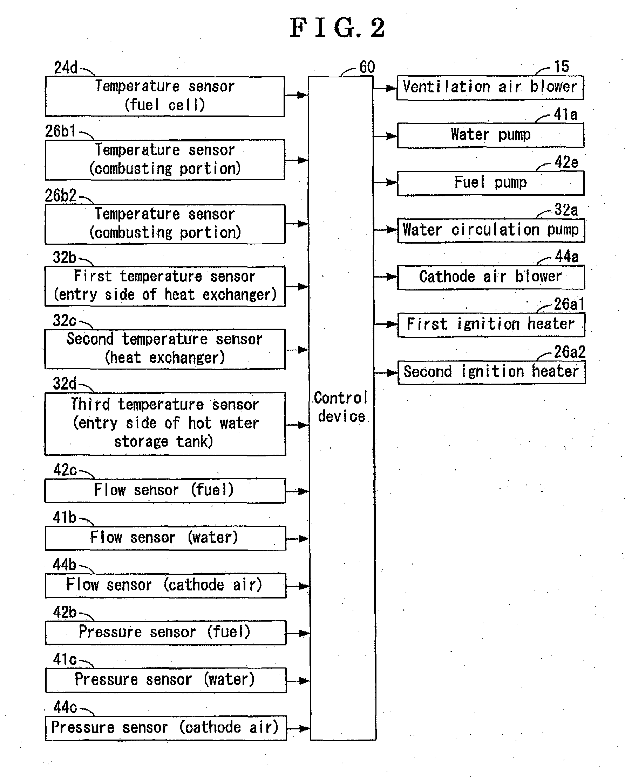

Further, the fuel cell system includes the control device 60. As illustrated in Fig. 2, the aforementioned temperature sensors 24d, 26b1, 26b2, 32b, 32c, 32d, the flow sensors 41b, 42c, 44b, the pressure sensors 42b, 41c, 44c, the pumps 32a, 41a, 42θ, and the blowers 15, 44a, and the ignition heaters 26af, 26a2 are connected to the control device 60. The control device 60 includes a microcomputer having an input-output Interface (I/O Interface), a CPU, a RAM, and a ROM all of which are connected to one another via a bus. The CPU has a function to operate the fuel cell system. The RAM temporarily stores a variable necessary to perform a program for the operation of the fuel cell system. The ROM stores such program.

The aforementioned temperature sensors 24d, 26b1, 26b2, 32b, 32c, 32d, the flow sensors 41b, 42c, 44b, and the pressure sensors 42b, 41c, 44c are detection sensors for detecting the fuel cell 24, the reforming portion 23, the combusting portion 26, the exhaust heat recovery system 30, and a state of a physical quantity of fluid (for example, the fuel, the oxidant gas, the source material, the water, and the anode-off gas) flowing in and out of the fuel cell 24, the reforming portion 23, the combusting portion 26, and the exhaust heat recovery system 30. At this time, the physical quantity is a quantity objectively measured and indicating physical characteristics specific to a measurement subject (an object or a substance), and a quantity calculated by the usage of such quantity objectively measured. That is, the physical quantity corresponds to a mass, a length, a volume, a pressure, a time period, a temperature, and a flow rate, for example. Specifically, according to the present embodiment, the physical quantity corresponds to the temperature of each of the fuel cell 24, the reforming portion 23, and the combusting portion 26, the temperature of fluid such as the storage water, for example, the flow rate or the pressure of the source material, water, and cathode air, for example.

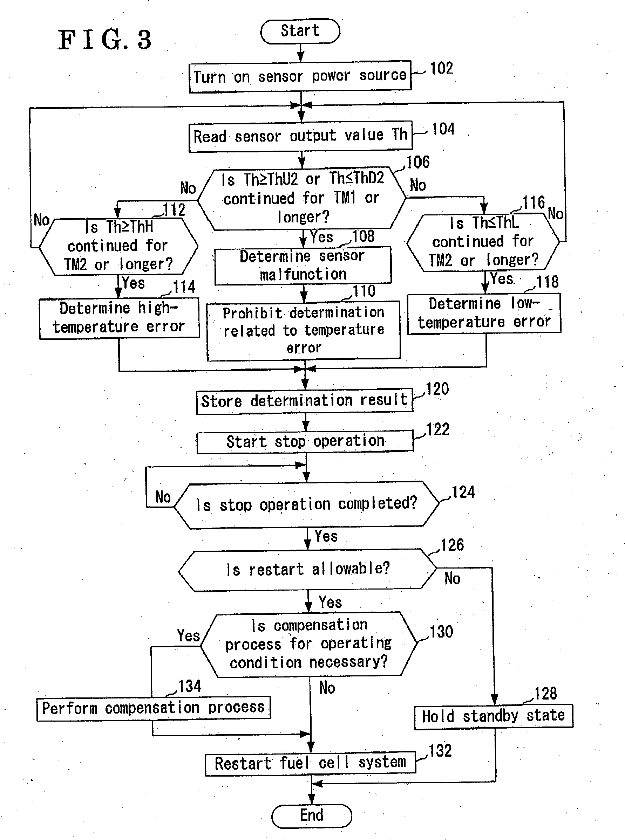

Next, an operation of the fuel cell system will be explained below. In a case where the electric power is supplied to the fuel cell system, a portion of the aforementioned detection sensors supplied with the electric power in association with the power supply to the control device 60 (i.e., the detection sensors supplied with the electric power from the control device 60) starts operating so that each of the detection sensors outputs and transmits an output value to the control device 60. In a case where a start switch is turned on (i.e., a sensor power source is turned on), the control device 60 starts performing a program corresponding to a flowchart illustrated in Fig. 3. When the start switch is turned on, the control device 60 operates a power source for the auxiliary machinery so that the detection sensors to which the electric power is supplied from the power source for the auxiliary machinery (the auxiliary machinery power source) start operating in step 102. In a power generation operation (or a start-up operation) of the fuel cell system, the control device 60 reads the output value of each of the detection sensors in step 104. According to the present embodiment, the temperature sensor will be explained as an example of the detection sensors. A thermocouple or a thermistor, for example, Is applied to the temperature sensor. Specifically, the temperature sensor 26b1 (or 26b2) detecting the temperature of the combusting portion 26 will be explained below. According to the present embodiment, the thermocouple is used for the temperature sensor 26b1 (or 26b2), however, the thermistor may be used for the temperature sensor 26b1 (or 26b2). In addition, the thermistor is used for the temperature sensor 32d, however, the thermocouple may be used for the temperature sensor 32d.

The control device 60 determines whether or not the temperature sensor 26b1 malfunctions on a basis of whether or not the output signal of the temperature sensor 26b1 is maintained to be out of a first determination range for a first determination time TM1 or longer in step 106 and step 108 (a sensor malfunction determination device). That is, in a case where the output signal of the temperature sensor 26b1, i.e., a sensor output value Th, is maintained to be out of the first determination range for the first determination time TM1 or longer (YES in step 106), the control device 60 determines that the temperature sensor 26b1 malfunctions in step 108. Specifically, in a case where the sensor output value Th of the temperature sensor 26b1 is maintained to be equal to or greater than a value ThU2, or equal to or smaller than a value ThD2 for the first determination time TM1 or longer, YES is determined in step 106 and the control device 60 determines that the temperature sensor 26b1 malfunctions in step 108.

On the other hand, in a case where the output signal of the temperature sensor 26b1 is maintained to fall within the first determination range for the first determination time TM1 or longer (NO in step 106), the control device 60 determines that the temperature sensor 26b1 does not malfunction. Specifically, in a case where the sensor output value Th is smaller than the value ThD2, or a case where the sensor output value Th is equal to or greater than the value ThU2 but such state does not continue for the first determination time TM1, for example, the control device 60 determines NO in step 106 so as not to determine the malfunction of the temperature sensor 26b1.

The first determination time TM1 is a predetermined time specified in view of a length of a control cycle time and an inhibition of a wrong detection caused by a noise (a wrong determination). Specifically, the first determination time TM1 is specified to be 2 or 3 seconds.

The first determination range is desirably specified to be a range beyond a normal operation range (i.e., a normal detection range) of the temperature sensor 26b1. That is, the range beyond the normal operation range includes the normal operation range. The first determination range is specified so that, in the first determination range, a signal value that exceeds a normal output value output in a case where the normal temperature sensor is used In a normal state and that should not be output in the normal state is obtained. That is, the aforementioned signal value is prevented from being output unless the temperature sensor malfunctions because of an error state such as a disconnection or a short-circuit, for example.

For example, a normal operating temperature range of the temperature sensor 26b1 (i.e., an operating temperature range X; ThD1≤x≤ThU1) is in a range from -30 degrees C to 800 degrees C. The first determination range is specified so that an upper limit value is the value ThU2, which is equal to or greater than an upper limit value ThU1 of the operating temperature range, and a lower limit value is the value ThD2, which is equal to or smaller than a lower limit value ThD1 of the operating temperature range. For example, the upper limit value ThU2 is equal to 1,000 degrees C while the lower limit value ThD2 is equal to -200 degrees C. In the case of the disconnection, the temperature sensor 26b1 outputs -200 degrees C serving as the lower limit value ThD2. In the case of the short-circuit, the temperature sensor 26b1 outputs 1,000 degrees C serving as the upper limit value ThU2.

The control device 60 determines whether or not a state of a physical quantity serving as a detection target of the temperature sensor 26b1 (i.e., the temperature of the combusting portion 26) is in an error state in step 112 and step 114 (or in step 116 and step 118) on a basis of whether or not the output signal of the temperature sensor 26b1 is maintained to be out of a second determination range that is fully included in the first determination range and that is narrower than the first determination range for a second determination time TM2 or longer, the second determination time TM2 being longer than the first determination time TM1 (a state error determination device).

In a case where the output signal of the temperature sensor 26b1 Is maintained to be out of the second determination range for the second determination time TM2 or longer (YES in step 112 or step 116), the control device 60 determines that the state of the physical quantity as the detection target of the temperature sensor 26b1 is In the error state In step 114 or step 118. Specifically, in a case where the sensor output value Th is equal to or greater than a value ThH for the second determination time TM2 or longer (YES in step 112), the control device 60 determines that the combusting portion 26 is in a high-temperature error state in step 114. In addition, in a case where the sensor output value Th is equal to or smaller than a value ThL for the second determination time TM2 or longer (YES in step 116), the control device 60 determines that the combusting portion 26 is in a low-temperature error state in step 118.

On the other hand, in a case where the output signal of the temperature sensor 26b1 falls within the second determination range for the second determination time TM2 or longer (NO in step 112 or step 116), the control device 60 determines that the state of the physical quantity as the detection target of the temperature sensor 26b1 (i.e., the temperature of the combusting portion 26) is not in the error state. Specifically, in a case where the sensor output value Th is in a range from the value ThL to the value ThH (i.e., ThL≤Th≤ThH), in a case where the sensor output value Th is less than the value ThL or greater than the value ThH but a duration time does not fulfill the second determination time TM2, the control device 60 is prevented from determining that the combusting portion 26 is in the temperature error state (NO in step 112 or step 116).

The second determination time TM2 is a predetermined time specified in view of a length of a control cycle time and an inhibition of a wrong detection caused by a noise (a wrong determination). Specifically, the second determination time TM2 is specified to be 3 to 10 seconds.

The second determination range is desirably specified within a range not exceeding the normal operation range (i.e., the normal detection range) of the temperature sensor 26b1. The second determination range is specified to be a normal temperature range assumed and obtained when the fuel cell system is operated in a normal state (a start-up operation, a power generation operation, and a stop operation).

For example, the normal operating temperature range of the temperature sensor 26b1 (the operating temperature range X; ThD1≤x≤ThU1) in the power generation operation is In the range from -30 degrees C to 800 degrees C. The second determination range includes the value ThH as the upper limit value being smaller than the upper limit value ThU1 of the operating temperature range, and the value ThL as the lower limit value being greater than the lower limit value ThD1 of the operating temperature range. For example, the upper limit value ThH is equal to 600 degrees C while the lower limit value ThL is equal to 0 degrees C.

In a state where it is determined that the temperature sensor 26b1 malfunctions in step 108, the control device 60 prohibits a determination related to the temperature error (i.e. operations in step 112 and step 114, or step 116 and step 118) from being performed in step 110. A masking of the determination related to the temperature error is conducted accordingly. Then, the control device 60 stores the determination result where the temperature sensor 26b1 malfunctions in step 120 and thereafter performs a stop operation or a restart of the fuel cell system in or after step 122.

In a case where the control device 60 determines the temperature error of the combusting portion 26 In step 114 or step 118, the control device 60 stores the determination result where the combusting portion 26 is in the temperature error state in step 120 so as to perform the stop operation or the restart of the fuel cell system In or after step 122.

The control device 60 starts the stop operation of the fuel cell system in step 122. In step 122, a parallel-off of the inverter device 50 relative to the system power supply 51 is caused, which leads to the stop of the fuel cell system. Accordingly, the power generation operation or the start-up operation is cancelled so that the stop operation is started, thereby starting a cooling of the fuel cell system.

Until the stop operation is completed, the control device 60 repeatedly performs the operation in step 124. At a time when the stop operation is completed, the fuel cell system is brought in a standby state. In the standby state, the operation of the fuel cell system is stopped. At this time, the control device 60 and a power source for control, for example, are operated while the auxiliary machinery power source, and a portion of the auxiliary machinery, i.e., the pumps 49a, 42e, the blowers 15, 44a, and the valve, is not operated. In a case where the fuel cell system is in the standby state and the restart of the fuel cell system is prohibited, the standby state is maintained until an inspection or a repair of the fuel cell system is conducted, and therefore the restart or the power generation operation of the fuel cell system is inhibited.

When the stop operation is completed (YES in step 124), the control device 60 then determines whether or not the restart of the fuel cell system is allowable in step 125. At this time, whether the stop operation is completed or not is determined on a basis of whether or not the temperature of a predetermined portion of the fuel cell system (for example, a portion at an inside of the fuel cell 24 where the temperature sensor 24d is mounted) turns to be a predetermined temperature or lower.

In step 126, the control device 60 determines whether or not the restart of the fuel cell system is allowable in view of the object (i.e., the temperature of the combusting portion 26 according to the present embodiment) based on which the stop operation of the fuel cell system is determined. Specifically, in a case where the output value of the temperature sensor 26b1, which detects the temperature of the combusting portion 26, obtained at a time when the stop operation is completed is out of the first determination range, the control device 60 determines that the temperature sensor 26b1 itself malfunctions. Thus, the control device 60 does not permit the restart of the fuel cell system.

Then, resulting from the aforementioned determination result, the control device 60 maintains or holds the fuel cell system in the standby state In step 128. That is, the control device 60 prohibits the restart of the fuel cell system,

On the other hand, in a case where the output value of the temperature sensor 26b1 obtained when the stop operation is completed is out of the second determination range but within the first determination range, it is determined that the temperature of the combusting portion 26 temporary increases so as to be out of the second determination range for any reason (for example, an excess supply of the source material because of a control delay or a breakage of the fuel valve 42a, or a deterioration of the cell 24a or the auxiliary machinery), and thus the restart of the fuel cell system is permitted.

In a case where a compensation process for an operating condition of the fuel cell system is not necessary when the restart of the fuel cell system is permitted (NO in step 130), the control device 60 starts the start-up operation (the power generation operation) in step 132 (i.e., the fuel cell system is restarted). On the other hand, In a case where the compensation process for the operation condition is necessary (YES in step 130), the control device 60 first performs the compensation process in step 134 and then starts the start-up operation (the power generation operation) in step 132. The start-up operation Is an operation where the source material, water, and cathode air are supplied to the fuel cell 24 and are burnt at the combusting portion 26, which leads to a heating of the evaporating portion 22 and the reforming portion 23. As a result, a warming-up of the fuel cell module 20 including the evaporating portion 22 and the reforming portion 23 is achieved. The power generation operation (a steady operation) is an operation where the source material and water are provided to generate the fuel that is supplied to the fuel cell 24, and the cathode air is also supplied to the fuel cell 24 to thereby perform the power generation after the completion of the start-up operation (alternatively, the start-up operation is omitted in a case where a predetermined condition where a predetermined portion is at a predetermined temperature or more Is satisfied, for example),

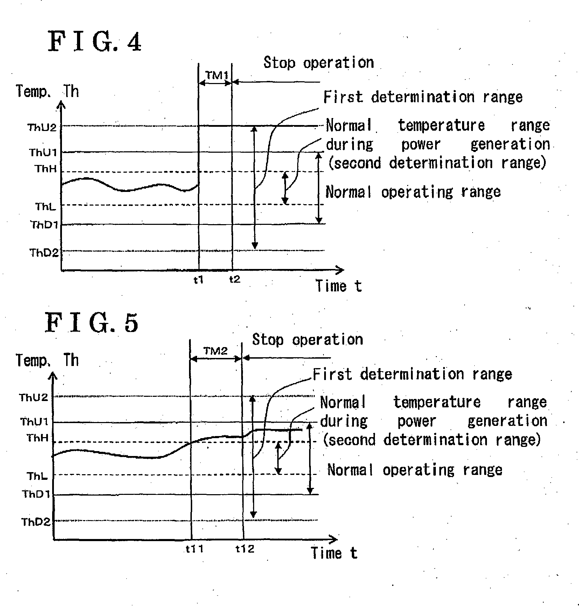

Next, the case where the temperature sensor 26b1 (or 26b2) malfunctions will be explained with reference to a time chart illustrated in Fig. 4. When the malfunction such as the disconnection occurs at the temperature sensor 26b1 at time t1 during the power generation operation, the output value Th of the temperature sensor 26b1 instantaneously increases to the value ThU2 from the second determination range defined from the value ThL to the value ThH. Thereafter such state is continued until the malfunction of the temperature sensor 26b1 is eliminated.

At a time (time t2) when the first determination time TM1 elapses from time t1, the output value Th of the temperature sensor 26b1 is maintained to be the value ThU2. Thus, the control device 60 determines that the temperature sensor 26b1 itself malfunctions in step 108. The determination result where the temperature sensor 26b1 malfunctions is stored in step 120. At the same time, the stop operation of the fuel cell system is started In step 122.

Further, the case where the temperature of the combusting portion 26 serving as the detection target of the temperature sensor 26b1 (or 26b2) will be explained with reference to a time chart illustrated in Fig. 5. In a case where the temperature of the combusting portion 26 increases for any reason (for example, an excess supply of the source material because of a control delay or a breakage of the fuel valve 42a, or a deterioration of the cell 24a or the auxiliary machinery), the output value Th of the temperature sensor 26b1 that is previously within the second determination range (from the value ThL to the value ThH) becomes equal to or greater than the value ThH at time t11. Thereafter, the temperature of the combusting portion 26 continuously increases. At a time (time t12) when the second determination time TM2 elapses from time t11, the output value Th is maintained to be equal to or greater than the value ThH. At this time, the control device 60 determines that the combusting portion 26 is in the high-temperature error state in step 114. The determination result where the combusting portion 26 is in the high-temperature error state is stored in step 120. At the same time, the stop operation of the fuel cell system is started in step 122.

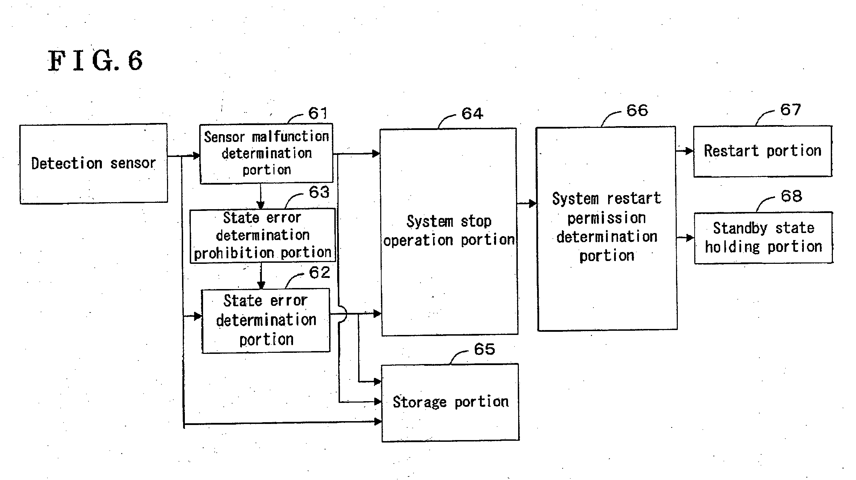

The case where the temperature sensor 26b1 (or 26b2) malfunctions will be further explained with reference to a block diagram in Fig. 6. The control device 60 includes a sensor malfunction determination portion 61 serving as the sensor malfunction determination device, a state error determination portion 62 serving as the state error determination device, a state error determination prohibition portion 63 serving as a determination prohibition device, a system stop operation portion 64, a storage portion 65 serving as a storage device, a system restart permission determination portion 66, a restart portion 67, and a standby state holding portion (restart prohibition portion) 68.

The sensor malfunction determination portion 61 receives the output signal from one of the detection sensors (for example, the temperature sensor 26b1), and determines whether or not the detection sensor (the temperature sensor 26b1) malfunctions on a basis of whether or not the output signal from the detection sensor is out of the first determination range for the first determination time TM1 or longer (the sensor malfunction determination device). At this time, the first determination time TM1 and the first determination range are specified in the same way as explained for step 106.

The sensor malfunction determination portion 61 determines that the detection sensor malfunctions in a case where the output signal from the detection sensor is out of the first determination range for the first determination time TM1 or longer. In a case where the output signal is not out of the first determination range for the first determination time TM1 or longer, the sensor malfunction determination portion 61 determines that the detection sensor does not malfunction. The sensor malfunction determination portion 61 transmits the determination result to the state error determination prohibition portion 63, the system stop operation portion 64, and the storage portion 65.

The state error determination portion 62 receives the same output signal as the output signal output from the detection sensor and received by the sensor malfunction determination portion 81. The state error determination portion 62 determines whether or not the state of the physical quantity as the detection target of the detection sensor (the temperature of the combusting portion 26) on a basis of whether or not the output signal is out of the second determination range for the second determination time TM2 or longer (the state error determination device). The second determination time TM2 and the second determination range are specified in the same way as explained for step 112 and step 116,

The state error determination portion 62 determines that the state of the physical quantity (the temperature of the combusting portion 26) as the detection target of the detection sensor is in the error state in a case where the output signal is out of the second determination range for the second determination time TM2 or longer. In a case where the output signal is not out of the second determination range for the second determination time TM2 or longer, the state error determination portion 62 determines that the state of the physical quantity is not in the error state. The state error determination portion 62 transmits the determination result to the system stop operation portion 64 and the storage portion 65.

The sensor malfunction determination portion 61 and the state error determination portion 62 perform the determination independently from each other and in parallel to each other. The sensor malfunction determination portion 61 and the state error determination portion 62 perform the determination while the fuel cell system is operating (i.e., in the start-up operation, the power generation operation, and the stop operation) and is in the standby state.

When receiving the determination result where the detection sensor malfunctions from the sensor malfunction determination portion 61, the state error determination prohibition portion 63 outputs a signal to the state error determination portion 62 so that the state error determination portion 62 is prohibited to perform the determination (or so that the state error determination portion 62 is allowed to continuously perform the determination but is prohibited to output the determination result to the system stop operation portion 64). The state error determination portion 62 receiving the aforementioned signal then performs operations depending on the signal received.

In a case where the system stop operation portion 64 receives from the sensor malfunction determination portion 61 the determination result where the detection sensor malfunctions, or from the state error determination portion 62 the determination result where the state of the physical quantity is in the error state, the system stop operation portion 64 performs the stop operation of the fuel cell system in the same way as step 122 and step 124 from the time when the system stop operation portion 64 receives the determination result.

The storage portion 65 receives the determination result from the sensor malfunction determination portion 61 and the determination result from the state error determination portion 62, and also receives the same output signal as the output signal output from the detection sensor and received by the sensor malfunction determination portion 61. Accordingly, by the usage of information stored at the storage portion 65, it is identifiable whether the detection sensor itself malfunctions or the state of the physical quantity serving as the detection target of the detection sensor is in the error state.

The system restart permission determination portion 66 performs the operation same as step 126 so as to determine whether or not the restart of the fuel cell system is allowable in view of the object (i.e., the temperature of the combusting portion 26 according to the present embodiment) based on which the stop operation of the fuel cell system Is determined.

The restart portion 67 receives a signal for permitting the restart of the fuel cell system from the system restart permission determination portion 66 so as to restart the fuel cell system by performing the same operation as step 132.

The standby state holding portion 68 receives a signal for holding the standby state of the fuel cell system (i.e., for prohibiting the restart of the fuel cell system) from the system restart permission determination portion 66 so as to hold the standby state of the fuel cell system (i.e., to prohibit the restart of the fuel cell system) by performing the same operation as step 128.

According to the aforementioned fuel cell system, as explained with reference to the time chart illustrated in Fig. 4, it is identifiable that the detection sensor itself (for example, the temperature sensor 26b1 or 26b2) malfunctions In a case where the temperature sensor 26b1 (or 26b2) malfunctions, and the determination result indicating the malfunction of the temperature sensor 26b1 is stored. At the same time, the stop operation of the fuel cell system is performed.

In addition, as explained with reference to the time chart illustrated in Fig. 5, it is identifiable that the temperature of the combusting portion 26 serving as the detection target of the temperature sensor 26b1 (or 26b2) is in the error state, and the determination result indicating the high-temperature error state of the combusting portion 26 is stored. At the same time, the stop operation of the fuel cell system is performed.

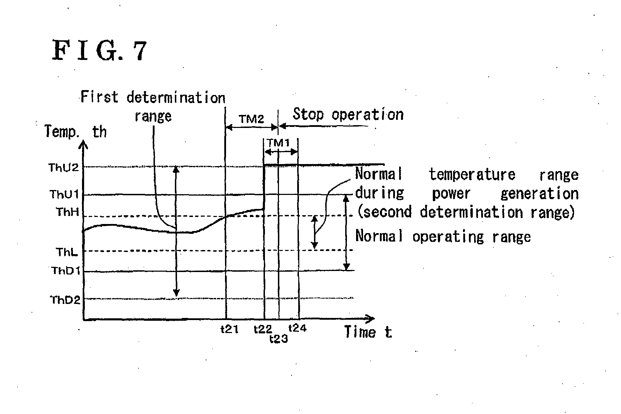

Further, in a case where the malfunction of the detection sensor occurs before the elapse of the second determination time TM2 from the occurrence of the temperature error of the combusting portion 26 as illustrated by a time chart in Fig. 7, a cause of the error, i.e., the malfunction of the detection sensor itself or the state error of the physical quantity as the detection target of the detection sensor, is identifiable on a basis of a detection record of the detection sensor stored at the storage portion 65.

That is, in a case where the temperature of the combusting portion 26 increases for any reason (for example, an excess supply of the source material because of a control delay or a breakage of the fuel valve 42a, or a deterioration of the cell 24a or the auxiliary machinery) during the power generation operation of the fuel cell system, the output value Th that is previously within the second determination range increases so as to be within a range from the value ThH to the value ThU1 (the range including the value ThH and excluding the value ThU1) at time t21. The temperature of the combusting portion 26 thereafter further increases and instantaneously increases up to the value ThU2 at a time (i.e., time t22) before the second determination time TM2 elapses from time t21 (i.e., time t23). Afterwards, such state is continued until the malfunction of the temperature sensor 26b1 is eliminated.

At this time, the state where the output value Th is equal to or greater than the value ThH is maintained at time t23 where the second determination time TM2 elapses from time t21. Thus, the state error determination portion 62 determines the high-temperature error state of the combusting portion 26 at time t23. The storage portion 65 stores the high-temperature error state of the combusting portion 26. At the same time, the system stop operation portion 64 performs the stop operation of the fuel cell system.

The output value Th is continuously equal to the value ThU2 at time t24 where the first determination time TM1 elapses from time t22. Thus, the sensor malfunction determination portion 61 determines that the temperature sensor 26b1 itself malfunctions. The storage portion 65 stores the malfunction of the temperature sensor 26b1.

The storage portion 65 may store the output signal from the detection sensor when receiving the determination result where the combusting portion 26 is in the high-temperature error state, for a predetermined time period. Accordingly, the cause of the error is accurately identifiable on a basis of the determination result from the state error determination portion 62 and the output signal of the detection sensor stored at the storage portion 65 at time t23.

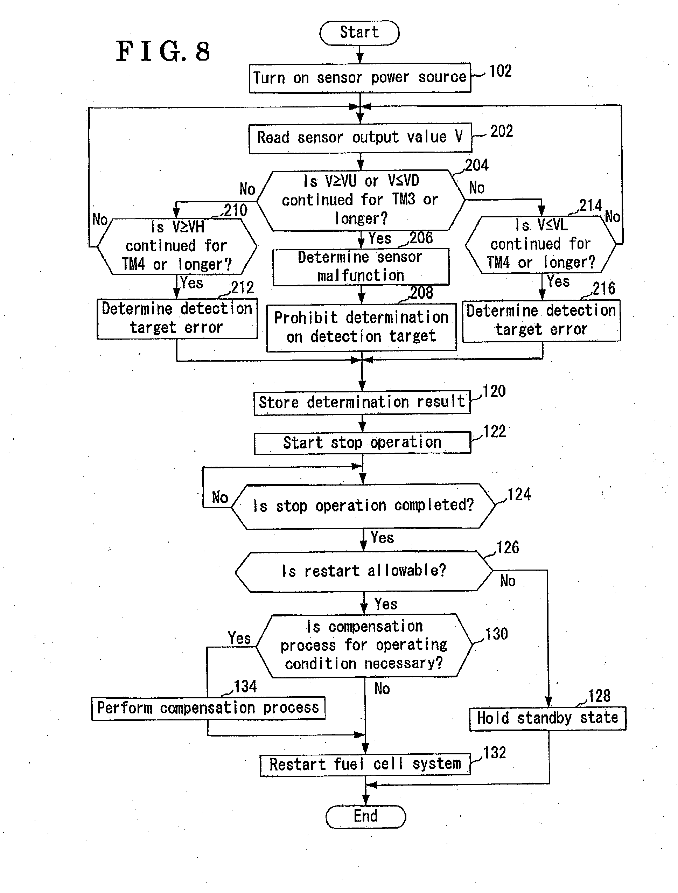

Next, the other detection sensor than the temperature sensor will be explained with reference to Figs. 8 to 10. The explanation for Figs. 8 to 10 is basically the same as the explanation for Figs. 3 to 5 and thus only a difference will be explained below. The other detection sensor than the temperature sensor corresponds to the flow sensor or the pressure sensor, for example. A value measured by the aforementioned other detection sensor than the detection sensor, i.e., a flow rate or a pressure value, for example, is output in analog form as an electric current value of 4-20 mA or a voltage value of 1-5V or 0-5V, for example, and is read by the control device 60. An example where the voltage value of 1-5V is output In analog form and is read by the control device 60 will be explained below.

The control device 60 reads the output value of the detection sensor in step 202 in the same way as step 104. The control device 60 determines whether or not the detection sensor malfunctions in step 204 and step 206 on a basis of whether or not the output signal of the detection sensor is out of the first determination range for a third determination time TM3 (which is similar to the first determination time TM1) or longer in the same way as step 105 and step 108 (the sensor malfunction determination device). That is, In a case where the output signal (the output value) of the detection sensor is out of the first determination range for the third determination time TM3 or longer (YES in step 204), the control device 60 determines that the detection sensor malfunctions in step 206. On the other hand, in a case where the output signal of the detection sensor falls within the first determination range for the third determination time TM3 or longer (NO in step 204), the control device 60 determines that the detection sensor does not malfunction.

For example, a normal operating range (i.e., an operating range Y: VD1≤Y≤VU1) of the detection sensor is In a range from 1.OV to 4.5V. The first determination range is specified so that an upper limit value is a value VU2, which is equal to or greater than an upper limit value VU1 of the operating range, and a lower limit value is a value VD2, which is equal to or smaller than a lower limit value VD1 of the operating range. For example, the upper limit value VU2 is equal to 5V while the lower limit value VD2 is equal to 0V. That is, the first determination range is from 0V to 5V. In the case of the disconnection, the detection sensor outputs 0V serving as the lower limit value VD2. In the case of the short-circuit, the detection sensor outputs 5V serving as the upper limit value VU2.

The control device 60 determines whether or not the state of the physical quantity serving as the detection target of the detection sensor is in the error state in step 210 and step 212 (or in step 214 and step 216) on a basis of whether or not the output signal of the detection sensor is maintained to be out of the second determination range that is fully included in the first determination range and that is narrower than the first determination range for a fourth determination time TM4 (which is similar to the second determination time TM2) or longer, In the same way as step 192 to step 118 (the state error determination device). The fourth determination time TM4 is longer than the third determination time TM3.

That is, In a case where the output signal of the detection sensor is maintained to be out of the second determination range for the fourth determination time TM4 or longer (YES in step 210 or step 214), the control device 60 determines that the state of the physical quantity as the detection target of the detection sensor is in the error state in step 212 or step 216. On the other hand, in a case where the output signal of the detection sensor falls within the second determination range for the fourth determination time TM4 or longer (NO in step 210 or step 214), the control device 60 determines that the state of the physical quantity as the detection target of the detection sensor is not in the error state.

For example, the normal operating range of the detection sensor (the operating range Y: VD1≤Y≤VU1) in the power generation operation is in the range from 1.5V to 4.5V. The second determination range includes a value VH as the upper limit value being smaller than the upper limit value VU1 of the operating range, and a value VL as the lower limit value being greater than the lower limit value VD1 of the operating range. For example, the upper limit value VH is equal to 4V while the lower limit value VL is equal to 2V.

The control device 60 prohibits the determination related to the error state of the physical quantity as the detection target in step 208 in the same way as step 110.

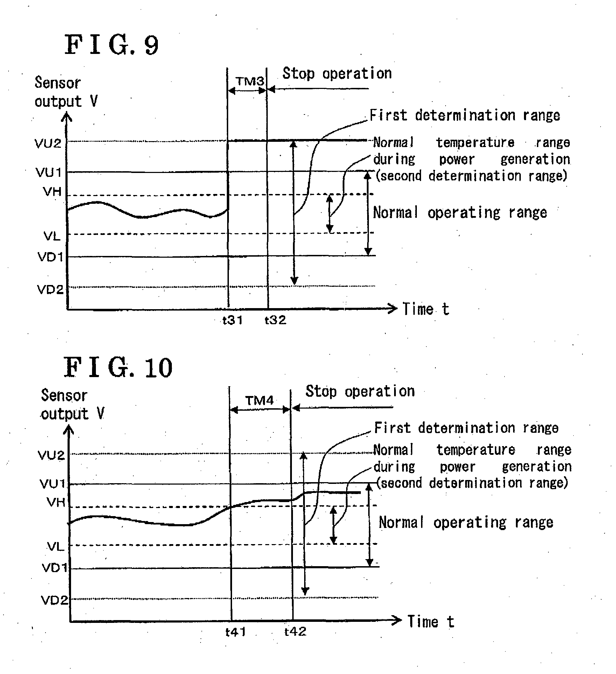

Accordingly, as illustrated by a time chart in Fig. 9, the control device 60 determines the malfunction of the detection sensor itself in the same way as the time chart In Fig. 4. The determination result indicating the malfunction of the detection sensor is stored at time t32. At the same time, the stop operation of the fuel cell system is started. Further, as illustrated by a time chart in Fig. 10, the control device 60 determines the error state of the physical quantity in the same way as the time chart in Fig. 5. The determination result indicating the error state of the physical quantity as the detection target of the detection sensor is stored at time t42. At the same time, the stop operation of the fuel cell system is started.

As explained above, according to the present embodiment, the sensor malfunction determination device (step 106, step 108, and the sensor malfunction determination portion 61) determines whether or not the detection sensor malfunctions on a basis of whether or not the output signal of the detection sensor is out of the first determination range for the first determination time TM1 or longer. The state error determination device (step 112 to step 118, and the state error determination portion 62) determines whether or not the state of the physical quantity serving as the detection target of the detection sensor is in the error state on a basis of whether or not the output signal of the detection sensor is out of the second determination range that is fully included in the first determination range and that is narrower than the first determination range for the second determination time TM2 or longer. The storage device (step 120 and the storage portion 65) stores the determination result of each of the determination devices.

Accordingly, in a case where the malfunction of the detection sensor because of the disconnection or the short-circuit, for example, occurs and therefore the output signal of the detection sensor is out of the first determination range, the sensor malfunction determination device determines that the detection sensor itself malfunctions when the aforementioned state is continued for the first determination time TM1 or longer. The determination takes a relatively short time. At this time, the state error determination device performs the determination after the elapse of the second determination time TM2 that is longer than the first determination time TM1. Therefore, the prohibition of the determination by the state error determination device after the sensor malfunction determination device determines the malfunction of the detection sensor may inhibit the existence of the determination of the malfunction of the detection sensor and the determination of the state error of the physical quantity as the detection target of the detection sensor at the same time.

In addition, in a case where the output signal of the detection sensor is within the first determination range and is out of the second determination range because of the error state of the physical quantity of the detection target (for example, the temperature of the combusting portion 26), and such state is continued for the second determination time TM2 or longer, the state error determination device determines that the state of the physical quantity as the detection target of the detection sensor is in the error state.

Further, the storage device stores the determination result of each of the determination devices. Thus, it is identifiable whether the detection sensor itself malfunctions or the detection target of the detection sensor is in the error state on a basis of the determination result stored at the storage device after at least one of the fuel cell system and the detection sensor malfunctions, which may increase maintainability of the fuel cell system.

The determination prohibition device (step 110 and the state error determination prohibition portion 63) prohibits the determination by the state error determination device when the sensor malfunction determination device determines that the detection sensor malfunctions. Accordingly, the state error determination device does not perform the determination unless the second determination time TM2 that is longer than the first determination time TM1 elapses. Thus, the prohibition of the determination by the state error determination device after the sensor malfunction determination device determines the malfunction of the detection sensor may inhibit the existence of the determination of the error state of the physical quantity as the detection target of the detection sensor, and the determination of the malfunction of the detection sensor at the same time. As a result, the error state of the physical quantity as the detection target of the detection sensor, and the malfunction of the detection sensor may be securely restrained from being wrongly determined.

According to the aforementioned embodiment, an alternative detection sensor of which the detection target is the same as that of the detection sensor and which serves as an alternative to the detection sensor may be provided. For example, the alternative detection sensor of the temperature sensor 26b1 is the temperature sensor 26b2. For both the temperature sensors 26b1 and 26b2, the temperature of the combusting portion 26 serves as the detection target.

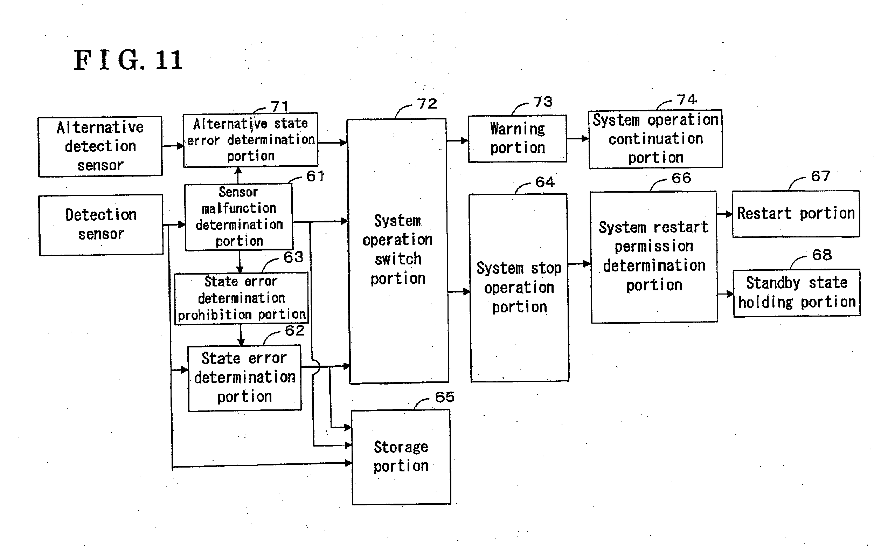

At this time, as illustrated in Fig. 11, the control device 60 may include an alternative state error determination portion 71 serving as an alternative state error determination device, a system operation switch portion 72, a warning portion 73 serving as a warning device, and a system operation continuation portion 74. Specifically, the alternative state error determination portion 71 receives the output signal from the alternative detection sensor after the sensor malfunction determination portion 61 determines that the detection sensor malfunctions, and determines whether or not the state of the physical quantity serving as the detection target of the alternative detection sensor is in the error state on a basis of whether or not the output signal of the alternative detection sensor is out of the second determination range for the second determination time TM2 or longer. The system operation switch portion 72 switches the operation mode of the fuel cell system between the start-up operation, the power generation operation, and the stop operation. The warning portion 73 warns about the malfunction of the detection sensor. The system operation continuation portion 74 continues the operation of the fuel cell system.

When receiving the determination result where the detection sensor malfunctions from the sensor malfunction determination portion 61, the alternative state error determination portion 71 instead of the state error determination portion 62 determines whether or not the state of the physical quantity is the detection target of the alternative detection sensor is in the error state on a basis of the output signal from the alternative detection sensor. The alternative state error determination portion 71 outputs the determination result to the system operation switch portion 72.

Accordingly, the fuel cell system is operated by means of the output signal from the alternative detection sensor. Thus, the power generation operation (the start-up operation) of the fuel cell system is continued while the malfunction of the detection sensor is being warned. Meanwhile, a replacement of the detection sensor, for example, may be prepared.

The detection sensor may output a signal Indicating an existence of the disconnection. In addition, a thermistor may be used for the detection sensor. In this case, an NTC type of thermistor where a resistance decreases in association with an increase of temperature, or a PTC type of thermistor where the resistance increases In association with the increase of temperature may be used.

In addition, according to the aforementioned embodiment, the fuel cell is a solid oxide fuel cell (SOFC). Alternatively, the fuel cell may be a polymer electrolyte fuel cell (PEFC), for example. In this case, the fuel cell system includes a fuel cell, a reformer, and an exhaust heat recovery system (which may be similar to the aforementioned exhaust heat recovery system 30). The fuel cell is supplied with a fuel gas (a hydrogen gas) and an oxidant gas (air including oxygen) so as to generate an electric power by a chemical reaction between hydrogen and oxygen and to output a direct-current voltage (for example, 40V).

The reformer reforms a fuel (a source fuel) by using water vapor so as to supply a reformed gas (a hydrogen-rich reformed gas) to the fuel cell. The reformer includes a burner (a combusting portion), a reforming portion, a carbon monoxide shift reaction portion (which will be hereinafter referred to as a CO shift portion), and a carbon monoxide selective oxidation reaction portion (which will be hereinafter referred to as a CO selective oxidation portion). A natural gas, LPG, kerosene, gasoline, and methanol, for example, may be applied to the source fuel.

The burner is supplied with the fuel and air for the combustion from the outside in the start-up operation. In addition, the burner is supplied with an anode-off gas (which is supplied to the fuel cell but not used thereat and is thus discharged) from a fuel electrode of the fuel cell in the steady operation. The burner burns each combustible gas supplied to the burner so as to send a combustion gas to the reforming portion.

The reforming portion reforms a mixed gas obtained by a mixture of the fuel supplied from the outside and the water vapor (water) from an evaporator by means of a catalyst filled in the reforming portion to thereby generate hydrogen gas and carbon monoxide gas (the water vapor reforming reaction). At the same time, carbon monoxide generated during the water vapor reforming reaction and water vapor react so as to be converted to hydrogen gas and carbon dioxide, i.e., the carbon monoxide shift reaction occurs. The thus generated gas (the reformed gas) is sent to the CO shift portion.

The CO shift portion causes carbon monoxide and water vapor contained in the reformed gas to react with a catalyst filled in the CO shift portion, thereby generating hydrogen gas and carbon dioxide gas. Accordingly, the reformed gas in which a carbon monoxide concentration is reduced is sent to the CO selective oxidation portion.

The CO selective oxidation portion causes carbon monoxide remaining in the reformed gas and air supplied from the outside for CO cleaning to react with a catalyst filled in the CO selective oxidation portion, thereby generating carbon dioxide. Accordingly, the reformed gas in which the carbon monoxide concentration is further reduced (10 ppm or lower) is sent to the fuel electrode of the fuel cell.
A fuel cell system includes a fuel cell (24), a reforming portion (23), a combusting portion (26), an exhaust heat recovery system (30), a detection sensor (24d, 26b1, 26b2, 32b, 32c, 32d, 41b, 42c, 44b, 42b, 41c, 44c), and a control device (60). The control device (60) includes a sensor malfunction determination device (step 106, step 108, 61) determining whether or not an output signal of the detection sensor is out of a first determination range for a first determination time (TM1) or longer, a state error determination device (steps 112 to 118, 62) determining whether or not a state of a physical quantity is in an error state on a basis of whether or not the output signal is out of a second determination range for a second determination time (TM2) or longer, and a storage device (step 120, 65) storing a determination result from each of the sensor malfunction determination device and the state error determination device.

## Claims

1. A fuel cell system comprising:
a fuel cell (**24**) generating an electric power by a fuel and an oxidant gas;
a reforming portion (**23**) generating the fuel by a source material and water;
a combusting portion (**26**) burning an anode-off gas of the fuel cell (**24**) to heat the reforming portion (**23**);
an exhaust heat recovery system (**30**) recovering an exhaust heat of the fuel cell system;
a detection sensor **(24d, 26b1, 26b2, 32b, 32c, 32d, 41b, 42c, 44b, 42b, 41c, 44c**) detecting a state of a physical quantity of at least one of the fuel cell (**24**), the reforming portion (**23**), the combusting portion (**26**), the exhaust heat recovery system (**30**), and a fluid flowing in and out of each of the fuel cell (**24**), the reforming portion (**23**), the combusting portion (**26**), and the exhaust heat recovery system (**30**), the fluid including the fuel, the oxidant gas, the source material, the water, and the anode-off gas; and
a control device (**60**) controlling the fuel cell system based on an output signal from the detection sensor (**24d, 26b1; 26b2, 32b, 32c, 32d, 41b, 42c, 44b, 42b, 41c; 44c**),
**characterized in that**
the control device (**60**) includes a sensor malfunction determination device (**step 106, step 108, 61**) determining whether or not the output signal of the detection sensor (**24d, 26b1, 26b2, 32b, 32c, 32d, 41b, 42c, 44b, 42b, 41c, 44c**) is out of a first determination range serving as a range exceeding a normal operating range of the detection sensor (**24d, 26b1, 26b2, 32b, 32c, 32d, 41b, 42c, 44b, 42b, 41c, 44c**) for a first determination time (**TM1**) or longer, and a state error determination device (**steps 112 to 118, 62**) determining whether or not the state of the physical quantity serving as a detection target of the detection sensor (**24d, 26b1, 26b2, 32b, 32c, 32d, 41b, 42c, 44b, 42b, 41c, 44c**) is in an error state on a basis of whether or not the output signal of the detection sensor (**24d, 26b1, 26b2, 32b, 32c, 32d, 41b, 42c, 44b, 42b, 41c, 44c**) is out of a second determination range serving as a range inhibited from exceeding the normal operating range of the detection sensor (**24d, 26b1, 26b2, 32b, 32c, 32d, 41b, 42c, 44b, 42b, 41c, 44c**) for a second determination time (**TM2**) or longer, the second determination range being narrower than the first determination range and fully included in the first determination range, the second determination time (**TM2**) being longer than the first determination time (**TM1**), and
the control device (**60**) includes a storage device (step **120, 65**) storing a determination result from each of the sensor malfunction determination device (**step 106, step 108, 61**) and the state error determination device (**steps 112 to 118, 62**).

2. The fuel cell system according to claim 1, wherein the control device (**60**) includes a determination prohibition device (**step 110, 63**) prohibiting a determination by the state error determination device (**steps 112 to 118, 62**) in a case where the sensor malfunction determination device (step **106, step 108, 61**) determines that the detection sensor (**24d, 26b1, 26b2, 32b, 32c, 32d, 41b, 42c, 44b, 42b, 41c, 44c**) malfunctions.

3. The fuel cell system according to claim 1, wherein in a case where an alternative detection sensor of which a detection target is the same as the detection target of the detection sensor (**24d, 26b1, 26b2, 32b, 32c, 32d, 41b, 42c, 44b, 42b, 41c, 44c**) and which serves as an alternative of the detection sensor (**24d, 26b1, 26b2, 32b, 32c, 32d, 41b, 42c; 44b, 42b, 41c, 44c**), the control device (**60**) includes an alternative state error determination device (**71**) determining whether or not the state of the physical quantity serving as the detection target of the alternative detection sensor is out of the second determination range for the second determination time (**TM2**) or longer after the sensor malfunction determination device (**step 106, step 108, 61**) determines that the detection sensor (**24d, 26b1, 26b2, 32b, 32c, 32d, 41b, 42c, 44b, 42b, 41c, 44c**) malfunctions, and a warning device (**73**) warning that the detection sensor (**24d, 26b1, 26b2, 32b, 32c, 32d, 41b, 42c, 44b, 42b, 41c, 44c**) malfunctions.

## Patentansprüche

1. Brennstoffzellensystem, mit
einer Brennstoffzelle (24), die eine elektrische Leistung mittels eines Brennstoffs und eines Oxidationsgases erzeugt,
einem Umformabschnitt (23), der den Brennstoff mittels eines Quellmaterials und Wasser erzeugt,
einem Verbrennungsabschnitt (26), der ein anodenseitiges Gas der Brennstoffzelle (24) verbrennt, um den Umformabschnitt (23) zu heizen,
einem Abgaswärmerückführungssystem (30), das eine Abgaswärme des Brennstoffzellensystems rückführt,
einem Erfassungssensor (24d, 26b1, 26b2, 32b, 32c, 32d, 41b, 42c, 44b, 42b, 41c, 44c), der einen Zustand einer physikalischen Größe von zumindest einem aus der Brennstoffzelle (24), dem Umformabschnitt (23), dem Verbrennungsabschnitt (26), dem Abgaswärmerückführungssystem (30), und einem Fluid, das in jedes und aus jedem der Brennstoffzelle (24), dem Umformabschnitt (23), dem Verbrennungsabschnitt (26), und dem Abgaswärmerückführungssystem (30) fließt, erfasst, wobei das Fluid den Brennstoff, das Oxidationsgas, das Quellmaterial, das Wasser, und das anodenseitige Gas umfasst, und
einem Steuergerät (60), das das Brennstoffzellensystem basierend auf einem Ausgabesignal von dem Erfassungssensor (24d, 26b1, 26b2, 32b, 32c, 32d, 41b, 42c, 44b, 42b, 41c, 44c) steuert,
**dadurch gekennzeichnet, dass**
das Steuergerät (60) ein Sensorstörungsbestimmungsgerät (Schritt 106, Schritt 108, 61), das bestimmt, ob sich das Ausgabesignal des Erfassungssensors (24d, 26b1, 26b2, 32b, 32c, 32d, 41b, 42c, 44b, 42b, 41c, 44c) für eine erste Bestimmungszeit (TM1) oder länger außerhalb eines ersten Bestimmungsbereichs, der als ein Bereich dient, der einen normalen Betriebsbereich des Erfassungssensors (24d, 26b1, 26b2, 32b, 32c, 32d, 41b, 42c, 44b, 42b, 41c, 44c) überschreitet, befindet oder nicht, und ein Zustandsfehlerbestimmungsgerät (Schritte 112 bis 118, 62) aufweist, das bestimmt, ob sich der Zustand der physikalischen Größe, die als ein Erfassungsziel des Erfassungssensors (24d, 26b1, 26b2, 32b, 32c, 32d, 41b, 42c, 44b, 42b, 41c, 44c) dient, in einem Fehlerzustand befindet oder nicht basierend darauf, ob sich das Ausgabesignal des Erfassungssensors (24d, 26b1, 26b2, 32b, 32c, 32d, 41b, 42c, 44b, 42b, 41c, 44c) für eine zweite Bestimmungszeit (TM2) oder länger außerhalb eines zweiten Bestimmungsbereichs, der als Bereich dient, der gegen ein Überschreiten des normalen Betriebsbereichs des Erfassungssensors (24d, 26b1, 26b2, 32b, 32c, 32d, 41b, 42c, 44b, 42b, 41c, 44c) gesperrt ist, befindet oder nicht, wobei der zweite Bestimmungsbereich enger als der erste Bestimmungsbereich und vollständig in dem ersten Bestimmungsbereich enthalten ist, wobei die zweite Bestimmungszeit (TM2) länger als die erste Bestimmungszeit (TM1) ist, und
das Steuergerät (60) ein Speichergerät (Schritt 120, 65) aufweist, das ein Bestimmungsergebnis von jedem aus dem Sensorstörungsbestimmungsgerät (Schritt 106, Schritt 108, 61) und dem Zustandsfehlerbestimmungsgerät (Schritte 112 bis 118, 62) speichert.

2. Brennstoffzellensystem nach Anspruch 1, wobei das Steuergerät (60) ein Bestimmungsunterbindungsgerät (Schritt 110, 63) aufweist, das eine Bestimmung durch das Zustandsfehlerbestimmungsgerät (Schritte 112 bis 118, 62) in einem Fall unterbindet, in dem das Sensorstörungsbestimmungsgerät (Schritt 106, Schritt 108, 61) bestimmt, dass der Erfassungssensor (24d, 26b1, 26b2, 32b, 32c, 32d, 41b, 42c, 44b, 42b, 41c, 44c) gestört ist.

3. Brennstoffzellensystem nach Anspruch 1, wobei im Falle eines alternativen Erfassungssensors, der ein Erfassungsziel gleich dem Erfassungsziel des Erfassungssensors (24d, 26b1, 26b2, 32b, 32c, 32d, 41b, 42c, 44b, 42b, 41c, 44c) hat, und der als eine Alternative des Erfassungssensors (24d, 26b1, 26b2, 32b, 32c, 32d, 41b, 42c, 44b, 42b, 41c, 44c) dient, das Steuergerät (60) ein alternatives Zustandsfehlerbestimmungsgerät (71), das bestimmt, ob sich der Zustand der physikalischen Größe, die als das Erfassungsziel des alternativen Erfassungssensors dient, außerhalb eines zweiten Bestimmungsbereichs befindet oder nicht für die zweite Bestimmungszeit (TM2) oder länger nachdem das Sensorstörungserfassungsgerät (Schritt 106, Schritt 108, 61) bestimmt, dass der Erfassungssensor (24d, 26b1, 26b2, 32b, 32c, 32d, 41b, 42c, 44b, 42b, 41c, 44c) gestört ist, und ein Warngerät (73) umfasst, das warnt, dass der Erfassungssensor (24d, 26b1, 26b2, 32b, 32c, 32d, 41b, 42c, 44b, 42b, 41c, 44c) gestört ist.

## Revendications

1. Système de pile à combustible comprenant :
une pile à combustible (24) générant une puissance électrique par un combustible et un gaz oxydant ;
une partie de reformage (23) générant le combustible par un matériau source et de l'eau ;
une partie de combustion (26) brûlant un gaz de dégagement d'anode de la pile à combustible (24) pour chauffer la partie de reformage (23) ;
un système de récupération de chaleur d'échappement (30) récupérant une chaleur d'échappement du système de pile à combustible ;
un capteur de détection (24d, 26b1, 26b2, 32b, 32c, 32d, 41b, 42c, 44b, 42b, 41c, 44c) détectant un état d'une quantité physique d'au moins l'un(e) parmi la pile à combustible (24), la partie de reformage (23), la partie de combustion (26), le système de récupération de chaleur d'échappement (30), et un fluide s'écoulant dans et hors de chacun (e) de la pile à combustible (24), de la partie de reformage (23), de la partie de combustion (26), et du système de récupération de chaleur d'échappement (30), le fluide comportant le combustible, le gaz oxydant, le matériau source, l'eau et le gaz de dégagement d'anode ; et
un dispositif de commande (60) commandant le système de pile à combustible sur la base d'un signal de sortie provenant du capteur de détection (24d, 26b1, 26b2, 32b, 32c, 32d, 41b, 42c, 44b, 42b, 41c, 44c),
**caractérisé en ce que**
le dispositif de commande (60) comporte un dispositif de détermination de dysfonctionnement de capteur (étape 106, étape 108, 61) déterminant si le signal de sortie du capteur de détection (24d, 26b1, 26b2, 32b, 32c, 32d, 41b, 42c, 44b, 42b, 41c, 44c) est en dehors ou non d'une première plage de détermination servant de plage dépassant une plage de fonctionnement normale du capteur de détection (24d, 26b1, 26b2, 32b, 32c, 32d, 41b, 42c, 44b, 42b, 41c, 44c) pendant une première durée de détermination (TM1) ou plus, et un dispositif de détermination d'erreur d'état (étapes 112 à 118, 62) déterminant si l'état de la quantité physique servant de cible de détection du capteur de détection (24d, 26b1, 26b2, 32b, 32c, 32d, 41b, 42c, 44b, 42b, 41c, 44c) est dans un état d'erreur ou non sur la base du fait que si le signal de sortie du capteur de détection (24d, 26b1, 26b2, 32b, 32c, 32d, 41b, 42c, 44b, 42b, 41c, 44c) est en dehors ou non d'une deuxième plage de détermination servant de plage empêchée de dépasser la plage de fonctionnement normal du capteur de détection (24d, 26b1, 26b2, 32b, 32c, 32d, 41b, 42c, 44b, 42b, 41c, 44c) pendant une deuxième durée de détermination (TM2) ou plus, la deuxième plage de détermination étant plus étroite que la première plage de détermination et entièrement incluse dans la première plage de détermination, la deuxième durée de détermination (TM2) étant plus longue que la première durée de détermination (TM1), et
le dispositif de commande (60) comporte un dispositif de stockage (étape 120, 65) stockant un résultat de détermination à partir de chacun du dispositif de détermination de dysfonctionnement de capteur (étape 106, étape 108, 61) et du dispositif de détermination d'erreur d'état (étapes 112 à 118, 62).

2. Système de pile à combustible selon la revendication 1, dans lequel le dispositif de commande (60) comporte un dispositif d'interdiction de détermination (étape 110, 63) interdisant une détermination par le dispositif de détermination d'erreur d'état (étapes 112 à 118, 62) dans le cas où le dispositif de détermination de dysfonctionnement de capteur (étape 106, étape 108, 61) détermine que le capteur de détection (24d, 26b1, 26b2, 32b, 32c, 32d, 41b, 42c, 44b, 42b, 41c, 44c) fonctionne mal.

3. Système de pile à combustible selon la revendication 1, dans lequel dans le cas où un capteur de détection de substitution dont une cible de détection est la même que la cible de détection du capteur de détection (24d, 26b1, 26b2, 32b, 32c, 32d, 41b, 42c, 44b, 42b, 41c, 44c) et qui sert de substituant du capteur de détection (24d, 26b1, 26b2, 32b, 32c, 32d, 41b, 42c, 44b, 42b, 41c, 44c), le dispositif de commande (60) comporte un dispositif de détermination d'erreur d'état de substitution (71) déterminant si l'état de la quantité physique servant de cible de détection du capteur de détection de substitution est en dehors de la deuxième plage de détermination ou non pendant la deuxième durée de détermination (TM2) ou plus après que le dispositif de détermination de dysfonctionnement de capteur (étape 106, étape 108, 61) détermine que le capteur de détection (24d, 26b1, 26b2, 32b, 32c, 32d, 41b, 42c, 44b, 42b, 41c, 44c) fonctionne mal, et un dispositif d'avertissement (73) avertissant que le capteur de détection (24d, 26b1, 26b2, 32b, 32c, 32d, 41b, 42c, 44b, 42b, 41c, 44c) fonctionne mal.
